(19) Europäisches Patentamt / European Patent Office / Office européen des brevets

(11) **EP 3 906 832 A1**

(12) **EUROPEAN PATENT APPLICATION**
published in accordance with Art. 153(4) EPC

(43) Date of publication:
**10.11.2021 Bulletin 2021/45**

(51) Int Cl.:
*A47L 11/24* *(2006.01)*   *A47L 11/40* *(2006.01)*
*A47L 11/28* *(2006.01)*

(21) Application number: **19907365.1**

(22) Date of filing: **29.09.2019**

(86) International application number:
**PCT/CN2019/109073**

(87) International publication number:
**WO 2020/140516 (09.07.2020 Gazette 2020/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.01.2019 CN 201910008517**

(71) Applicant: **Yunjing Intelligence Technology (Dongguan) Co., Ltd.**
**Dongguan, Guangdong 523808 (CN)**

(72) Inventors:
• **ZHANG, Junbin**
**Dongguan, Guangdong 523808 (CN)**
• **LI, Chang**
**Dongguan, Guangdong 523808 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(54) **MOBILE ROBOT**

(57)     The present application provides a mobile robot, including: a robot body, a drive wheel, and at least two distance sensors. The robot body includes a target side surface. The drive wheel is provided at a bottom of the robot body. The drive wheel is provided to drive the robot body to move. The at least two distance sensors are sequentially provided at different positions on the robot body along a forward movement direction of the mobile robot.

FIG. 1

EP 3 906 832 A1

# Description

## TECHNICAL FIELD

The application relates to the technical field of intelligent robots, in particular to a mobile robot.

## BACKGROUND

Mobile robots can move in indoor or outdoor according to certain rules. For example, cleaning robots and the like are mostly set to automatically clean the floor, such as indoor cleaning for families or large places, or the like. In order to avoid or reduce collisions, mobile robots need to detect obstacles around them during their movement.

Mobile robots such as cleaning robots are mostly flat cylindrical structures. A distance sensor arranged on a side of a mobile robot is the farthest from a center line of the mobile robot, so that a distance to the obstacle detected by the distance sensor is the nearest distance of the mobile robot from the obstacle, the distances of other positions on the side of the mobile robot from the obstacle are larger than the nearest distance. Using the distance measured by the distance sensor arranged at this position, the distance between the mobile robot and the obstacle can be better positioned, thus, detection data of the distance sensor can be used to ensure the mobile robot to smoothly move along the wall, around the obstacle and the like.

However, for mobile robots whose side surface is non-cylindrical, if the distance detected by the distance sensor provided on the side surface is used, the distance from other positions of the side surface to the obstacle may be greater or less than the detected distance, thereby making a detection accuracy of the mobile robot to detect the obstacle located beside its side surface poor.

## SUMMARY

The main objective of the present application is to propose a mobile robot, which aims to solve the technical problem that a robot has low detection accuracy for obstacles located on its side.

In order to achieve the above object, the mobile robot proposed in the present application includes: a robot body including a target side, the target side including a non-cylindrical side; a drive wheel arranged at a bottom of the robot body and configured to drive the robot body to move; and at least two distance sensors sequentially arranged at different positions on the target side surface along the forward movement direction of the mobile robot, and configured to acquire distances to obstacles; the target side surface is a side surface between a foremost position and a rearmost position of the robot body in the forward movement direction of the mobile robot.

The present application also proposes a mobile robot, including: a robot body including a target side surface; a drive wheel arranged at the bottom of the robot body and configured to drive the robot body to move; at least two distance sensors configured to collect distances to obstacles. The at least two distance sensors are sequentially arranged at different positions on the target side surface along a forward movement direction of the mobile robot, the target side surface is a side surface between a foremost position and a rearmost position of the robot body in the forward movement direction of the mobile robot. The at least two distance sensors are disposed in front of a drive wheel rotation axis in the forward movement direction of the mobile robot.

As can be seen from the technical schemes, the disclosed mobile robot has a target side surface between the foremost position and the rearmost position of the robot body along its forward movement direction. The target side surface includes a non-cylindrical side surface. In the present application, at least two distance sensors are sequentially arranged at different positions along the forward movement direction of the mobile robot. Thus, by adding a distance sensor in the forward movement direction of the mobile robot and the distance sensor being capable of acquiring a distance to an obstacle, a detection range of distance between the target side surface of the mobile robot and obstacles is increased, thus improving the accuracy of the mobile robot with a non-cylindrical side surface to detect obstacles located near the side of the mobile robot.

## BRIEF DESCRIPTION OF THE DRAWINGS

In order to more clearly illustrate the embodiments of the present application or the technical solutions in the related art, a brief description will be made related to the accompanying drawings used in the description of embodiments or related art. Obviously, the drawings in the following description are only some embodiments of the present application. It will be apparent to those skilled in the art that other figures can be obtained according to the structures shown in the drawings without creative work.

FIG. 1 is a schematic perspective view of a mobile robot according to an embodiment of the present application.

FIG. 2 is a schematic view of a mobile robot provide by an embodiment of the present application after a portion of a shell is removed.

FIG. 3 is a bottom view of a mopping robot provided in an embodiment of the present application.

FIG. 4 is a bottom view of a sweeping robot provided in an embodiment of the present application.

FIG. 5 is another structural diagram of a mobile robot provide in an embodiment of the present application.

FIGS. 6-8 are exemplary diagrams of a mobile robot provided by embodiments of the present application, respectively.

FIGS. 9-13 are schematic diagrams of other structures of that mobile robot provide by embodiments of the present application.

FIGS. 14-15 are other exemplary diagrams of the mobile robot provided by embodiments of the present application.

The realization of the purposes, functional features and advantages of the present application will be further explained in combination with embodiments and with reference to the accompanying drawings.

**DETAILED DESCRIPTION OF THE EMBODIMENTS**

A clear and complete description will be made related to technical solutions of the embodiments of the present application in combination with the accompanying drawings in the embodiments of the present application. Obviously the described embodiments are only part rather than all of the embodiments of the present application. Based on the embodiments in this application, other embodiments obtained by those of ordinary skill in the art without creative work all fall within the scope of protection of this application.

It should be noted that, if there are directional indications (such as top, bottom, left, right, front, rear, etc.) in the embodiments of the present application, the directional indications are only set to explain the relative positional relationship, motion situation, etc. between the components under a specific posture (as shown in the drawings), and if the specific posture changes, the directional indications also change accordingly.

In addition, the descriptions associated with, e.g., "first" and "second," in the present disclosure are merely for descriptive purposes, and cannot be understood as indicating or suggesting relative importance or impliedly indicating the number of the indicated technical feature. Therefore, the feature associated with "first" or "second" can expressly or impliedly include at least one such feature. Besides, the technical solutions between the various embodiments can be combined with each other, but they must be based on the realization of those of ordinary skill in the art. When the combination of technical solutions is contradictory or cannot be achieved, it should be considered that such a combination of technical solutions does not exist, nor is it within the scope of the present disclosure.

In order to help to accurately understand the description of the embodiments of the present application, some terms related to the embodiments of the present application will be explained below.

1) Mobile robot. Mobile robot are devices that can move autonomously. The mobile robots are provided with drive wheels, which can be configured to drive the mobile robots to move. The mobile robots include but are not limited to cleaning robots, exhibition robots, storage robots, etc. Among them, the cleaning robots can be sweeping robots, mopping robots, sweeping and mopping integrated robots, or the like.

2) Distance sensor. A distance sensor is configured to measure a distance between the distance sensor and an obstacle.

The distance sensor can be a ultrasonic distance measuring sensor, a laser distance measuring sensor, an infrared distance measuring sensor, a depth sensor, or the like.

For example, if the distance sensor is an infrared distance measuring sensor, a time-of-flight (TOF) method can be used to calculate a distance. For example, the distance sensor consists of an infrared emitter, a detector and an electronic circuit, where the infrared emitter is configured to emit light, the detector is configured to receive reflected light, and the electronic circuit calculates a difference between a light emission time and a return time. As a result, a spent time taken for light to be irradiated from the distance sensor to a nearest object and then reflected to the distance sensor is measured, and then the distance between the distance sensor and the object reflecting the light is calculated using the spent time, the object reflecting the light is also called an obstacle.

3) Rotational axis. A straight line around which an object rotates is a rotation axis. For example, when a drive wheel is driven to rotate, the drive wheel rotates about a rotation axis of the drive wheel.

The embodiment of the present application provides a mobile robot, which can be a cleaning robot configured to automatically clean a floor. The application scenarios of the cleaning robot can be household indoor cleaning, large-scale place cleaning, etc. The types of mobile robots set as cleaning robots include a sweeping robot 1001, a mopping robot 1002, a sweeping and mopping integrated robot, etc.

It should be understood that the mobile robots of embodiments of the present application may also be exhibition robots, storage robots and the like.

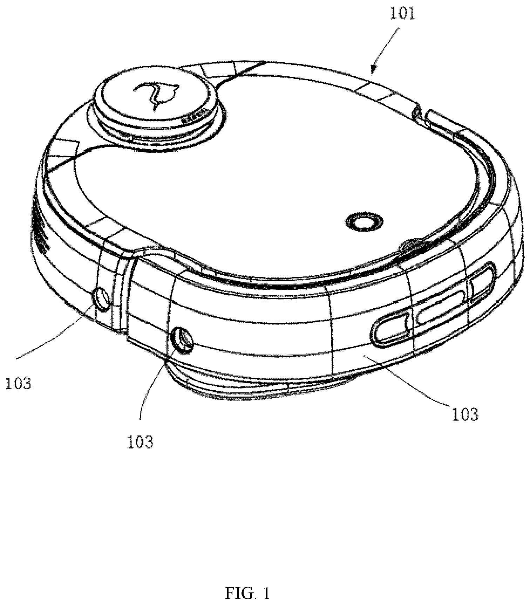

As shown in FIGS. 1 to 5, the mobile robot includes a robot body 101, a walking unit 102, a sensor unit 103, and the like. The robot body 101 may have various structures. In the embodiment of the present application, the robot body 101 has a D-shaped structure as an example. As shown in FIG. 1, the robot body 101 of the D-shaped structure includes a square structure body disposed at the front and a semicircular structure body disposed at the rear. The square structure body can be a rectangular structure with rounded front edges.

The square structure body is connected with the semicircular structure body. In a forward movement direction of the mobile robot, the square structure body is located in front of the semicircular structure body, that is, a direction from the semicircular structure to the square structure is the forward movement direction of the mobile robot. In the embodiment of the present application, the robot body 101 has a left-right symmetrical structure.

When the mobile robot is used as a cleaning robot, it can also include a cleaning member, which may be a mopping member or a side brush. The cleaning member is configured to clean the floor, and a number of cleaning members may be one or more. Under a cleaning working state, the cleaning member can rotate. The cleaning member is provided at a bottom of the robot body 101, specifically at a forward position of the bottom of the robot body 101. Specifically, a driving mechanism is provided near a head of the robot body 101, for example, the driving mechanism includes a driving motor and a rotating shaft, the driving motor is provided inside the robot body 101, two rotating shafts are extended out from the bottom of the robot body 101, and the cleaning members are sleeved on the rotating shafts. The driving motor can drive the rotating shafts to rotate, so that the rotating shafts drive the cleaning members to rotate.

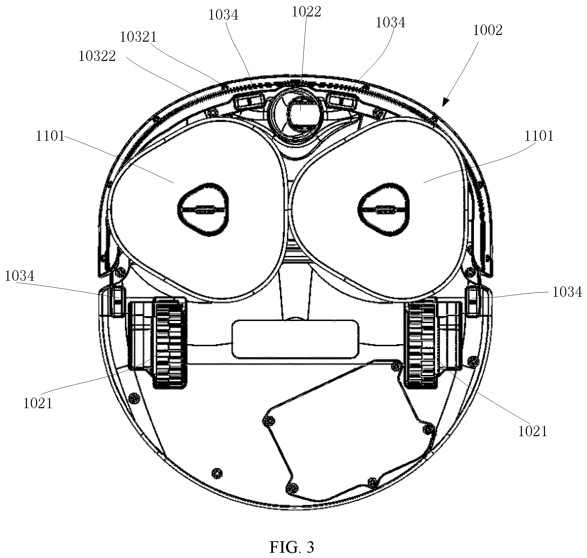

As shown in FIG. 3, for the mopping robot 1002, the cleaning member is specifically a mopping member 1101, and the mopping member 1101 is, for example, a mop. The mopping member 1101 is configured to mop and clean the floor.

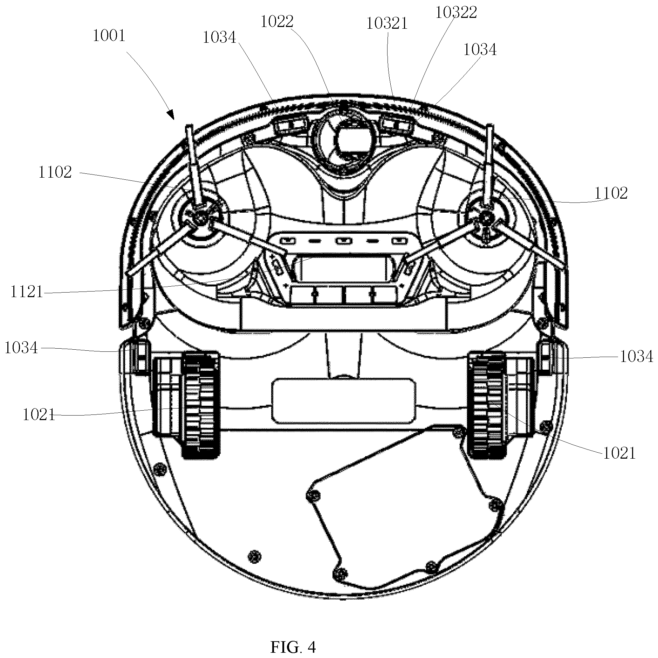

As shown in FIG. 4, for the sweeping robot 1001, the cleaning member is specifically a side brush 1102, and the side brush 1102 is configured to sweep and clean the floor. The sweeping robot 1001 is further provided with a dust suction device including a dust suction port 1121 provided at the bottom of the robot body 101, a dust box 1122 and a fan 1123 provided inside the robot body 101. The side brush 1102 is disposed on the rotating shaft at the bottom of the sweeping robot 1001. After the rotating shaft drives the side brush 1102, the rotating side brush 1102 sweeps garbage such as dust to the vicinity of the dust suction port 1121 at the bottom of the sweeping robot 1001. Due to the suction effect of the fan 1123, the garbage is sucked into the dust suction port 1121 and enters the dust box 1122 through the dust suction port 1121 for temporary storage.

In the embodiment of the present application, the cleaning member of the cleaning robot can be detachably arranged. Specifically, when a floor mopping cleaning is required, the mopping member 1101 is mounted to the bottom of the robot body 101 to perform the floor mopping cleaning; when a floor sweeping cleaning is required, the side brush 1102 is used instead of the mopping member 1101, and the side brush 1102 is mounted to the bottom of the robot body 101 to sweep the floor.

The walking unit 102 is a component related to the movement of the mobile robot, and includes a drive wheel 1021 and a universal wheel 1022. The drive wheel 1021 is provided to drive the mobile robot to move, that is, to drive the robot body 101 to move, the universal wheel 1022 and the drive wheel 1021 cooperate to realize steering and movement of the mobile robot. Specifically, there may be two drive wheels 1021. The two drive wheels 1021 are arranged at a position slightly back from the middle of the bottom of the robot body 101, one of the drive wheels 1021 is arranged at the left side and the other of the drive wheels 1021 is arranged at the right side respectively, and the universal wheel 1022 is arranged at a front position of the bottom of the robot body 101, specifically on the central axis of the mobile robot. When the mobile robot is set as a cleaning robot, the universal wheel 1022 is specifically set on the central axis of the cleaning robot and located between the left and right cleaning members.

Each drive wheel 1021 is provided with a drive wheel motor, and the drive wheel 1021 rotates under the drive of the drive wheel motor. As a result, the drive wheel provides the mobile robot with moving power, that is, after the drive wheel 1021 rotates, the mobile robot is driven to move. The drive wheels 1021 and the universal wheel 1022 cooperate to realize the movement and steering of the mobile robot. After the drive wheel 1021 rotates, the mobile robot can be driven to move forward or backward. By controlling a rotation speed difference between left and right drive wheels 1021, a steering angle of the mobile robot can be controlled.

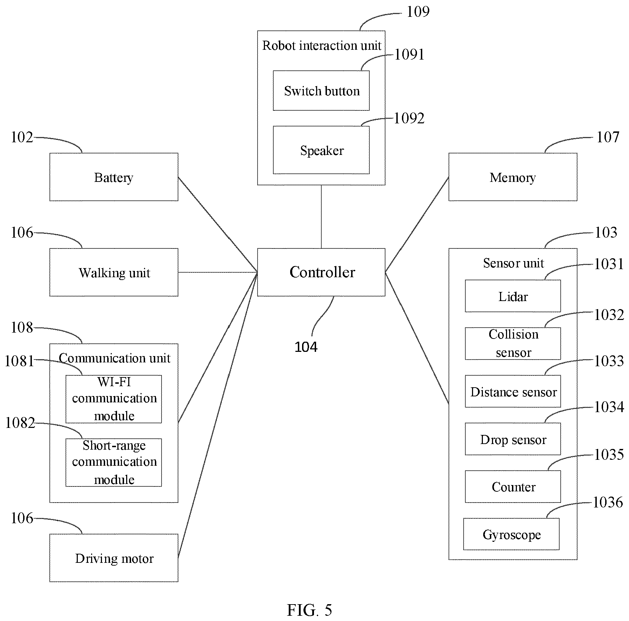

The controller 104 is provided inside the robot body 101, and is configured to control the mobile robot to perform specific operations. The controller 104 may be, for example, a central processing unit (CPU), a microprocessor, or the like. As shown in FIG. 5, the control 104 is electrically connected to components such as a battery 105, a memory 107, a driving motor 106, a walking unit 102, a sensor unit 103, a communication unit 108, and a robot interaction unit 109 to control those components.

The battery 105 is provided inside the robot body 101, and the battery 105 is provided to provide power to the mobile robot.

The robot body 101 is further provided with a charging member configured to obtain power from an external device to charge the battery 105.

The memory 107 is provided on the robot body 101, and a program is stored on the memory 107. When the program is executed by the controller 104, corresponding operations are realized. The memory 107 is also configured to store parameters for use by the mobile robot. The memory 107 includes, but is not limited to, a magnetic disk memory, a compact disc read-only memory (CD-ROM), an optical memory, or the like.

The communication unit 108 is provided on the robot body 101, and is provided to allow the mobile robot 100 to communicate with an external device, and includes, but is not limited to, a WI-Fi communication module 1081, a short-range communication module 1082, or the like. The mobile robot can communicate to a WI-FI router through the WI-FI communication module 1081, thus communicating with a terminal through the WI-FI router. The mobile robot may communicate with a base station through the short range communication module 1082. The base station is a cleaning equipment device used in conjunction with the mobile robot.

The sensor unit 103 provided on the robot body 101 includes various types of sensors, such as a lidar 1031, a collision sensor 1032, a distance sensor 1033, a drop sensor 1034, a counter 1035, and a gyroscope 1036.

The lidar 1031 includes a transmitter and a receiver. The lidar 1031 is provided at the top of the robot body 101. During working, the lidar 1031 rotates and emits a laser signal through the transmitter on the lidar 1031. The laser signal is reflected by an obstacle, so that the receiver of the lidar 1031 receives the laser signal reflected back by the obstacle. A circuit unit of the lidar 1031 can detect and obtain environmental information around the lidar 1031, such as a distance and an orientation of the obstacle relative to the lidar 1031, by analyzing the received laser signal.

The collision sensor 1032 includes a collision shell 10321 and a trigger sensor 10322. The collision shell 10321 is provided at the front of the robot body 101. The collision shell 10321 has a U-shaped structure and is provided around the front of the head and side edges of the robot body 101. Specifically, the collision shell 10321 is provided at the front of the head of the robot body 101 and the left and right sides of the robot body 101. The trigger sensor 10322 is disposed inside the robot body 101 and behind the collision shell 10321. Between the collision shell 10321 and the robot body 101, an elastic buffer member, such as a spring or an elastic strip, is provided. When the mobile robot collides with an obstacle through the collision shell 10321, the collision shell 10321 moves toward the interior of the mobile robot and compresses the elastic buffer member. After the collision shell 10321 has moved a certain distance into the mobile robot, the collision shell 10321 is in contact with the trigger sensor 10322, which is triggered to generate a collision signal. For example, a low level signal output when the collision sensor 1032 is not triggered, and the collision signal generated by the trigger sensor 10322 is a high level signal, which can be transmitted to the controller 104 in the robot body 101 for processing. After colliding with the obstacle, the mobile robot moves away from the obstacle and the collision shell 10321 moves back to its original position under the action of the elastic buffer member. As can be seen, the collision sensor 1032 can detect the obstacle and act as a buffer when colliding with the obstacle.

The distance sensor 1033 may be specifically an infrared detection sensor and configured to detect the distance from the obstacle to the distance sensor 1033. The distance sensor 1033 is provided on a side of the robot body 101, so that a distance from an obstacle located near the side of the mobile robot to the distance sensor 1033 can be measured by the distance sensor 1033.

There may be one or more drop sensors 1034 provided at a bottom edge of the robot body 101. When the mobile robot moves to an edge position of the floor, the risk of the mobile robot falling from a height can be detected by the drop sensor 1034, thus performing a corresponding anti-drop response, such as the mobile robot stopping moving or moving in a direction away from a drop position, etc.

The counter 1035 and the gyroscope 1036 are also provided inside the robot body 101. The counter 1035 is configured to accumulate a total angle of rotation of the drive wheels 1061 to calculate a moving distance of the drive wheels 1061 driving the mobile robot to move. The gyroscope 1036 is configured to detect an angle of rotation of the mobile robot so that an orientation of the mobile robot can be determined.

The robot interaction unit 109 is provided on the robot body 101, and the user can interact with the mobile robot through the robot interaction unit 109. The robot interaction unit 109 includes, for example, a switch button 1091, a speaker 1092 and the like. The user can control the mobile robot to start or stop working by pressing the switch button 1091. The mobile robot may play a beep sound to the user through the speaker 1092. It should be understood that the mobile robot described in the embodiments of the present application is only a specific example which does not specifically limit the mobile robot of the embodiments of the present application, and the mobile robot may also be of other specific implementation manners. For example, in other implementation manners, the mobile robot may have more or fewer components than the mobile robot shown in FIG. 1.

Based on the above implementation manners, in one implementation manner, the mobile robot of the embodiment of the present application includes a robot body 101 and a drive wheel. The drive wheel is provided at a bottom of the robot body 101 and configured to drive the robot body 101 to move. The robot body 101 includes a plurality of side surfaces, that is, the robot body 101 includes outer side surfaces forming a circle between a top surface and a bottom surface of the robot body 101, the outer side surfaces can be divided into different side surfaces based on different positions thereof. The robot body 101 includes one or more target side surfaces including non-cylindrical side surfaces.

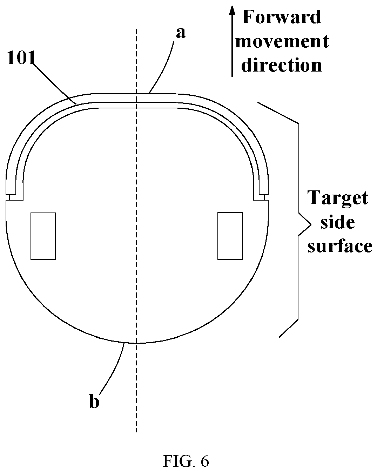

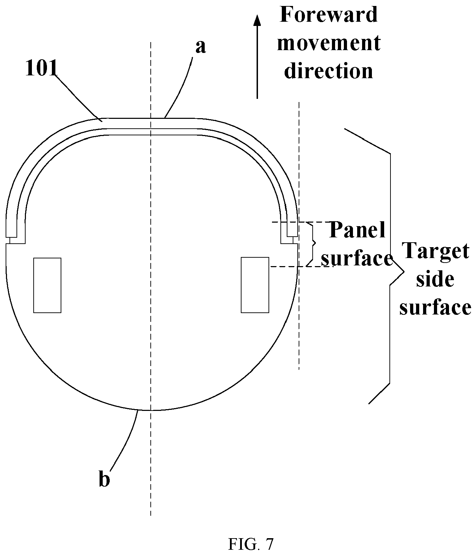

The target side surface is a side surface between the foremost position and the rearmost position of the robot body 101 in the forward movement direction of the mobile robot, and specifically, the target side surface is a left side surface or a right side surface between the foremost position and the rearmost position of the robot body 101. For example, as shown in FIG. 6, the foremost position of the robot body 101 is the foremost position a of the rounded rectangular structure body of the robot body 101, and the rearmost position of the robot body 101 is the rearmost position b of the semicircular structure body of the robot body 101. The target side surface having a non-cylindrical side surface can be understood as at least a part of which being a non-cylindrical side surface located between the forward position and the rearmost position of the robot body 101 in the forward movement direction of the mobile robot. The non-cylindrical side surface can be implemented in a variety of ways, including but not limited to a planar structure, a wavy curved surface structure or a bend surface structure, or the like. For example, as shown in FIG. 7, the left and right sides of the robot body 101, from the foremost position to the rearmost position of the robot body 101, have a part of the side surfaces that is a planar side surface, that is, the target side surface includes a planar structure.

In order to achieve a target side surface to include a planar structure, in one example, the robot body is a D-shaped structure, and in particular, the robot body includes a square structure body and a semicircular structure body, the square structure body and the semicircular structure body are connected to each other. In the forward movement direction of the mobile robot, the square structure body is located in front of the semicircular structure body. The planar structure of the target side surface includes is a side surface of the square structure body.

It should be understood that besides the D-shaped structure, the robot body may also be in other structural forms, such as a square structure, an oval structure, etc. For example, in a specific example, the mobile robot also includes a mopping member disposed at the bottom of the robot body and configured to mop and clean the floor. The mobile robot can also be called as a mopping robot. A cleaning range of the mopping member in the cleaning process is within a coverage range of edges of the robot body. In this way, through the collision between the robot body and the obstacle during the working process, the mopping member can be prevented from hitting the obstacle. At this time, the drive wheel includes a first drive wheel and a second drive wheel, and a rotation axis of the first drive wheel is coincided with a rotation axis of the second drive wheel. A preset position is provided between the first drive wheel and the second drive wheel on the rotation axis of the first drive wheel or the rotation axis of the second drive wheel. In this way, when the mobile robot rotates, the preset position may sometimes be a rotation center. In addition, in the forward movement direction of the mobile robot, a distance from the preset position to a front edge of the robot body is a first distance, and a distance from the preset position to a side edge of the robot body in a direction perpendicular to the forward movement direction of the mobile robot is a second distance. The first distance is greater than the second distance, so that. a side surface of the robot body includes a target side surface, and the side surface of the robot body is non-cylindrical, a structural form helpful to reduce a distance between the mopping member and the edge of the robot body can be conveniently configured, thereby reducing a blind area that cannot be cleaned.

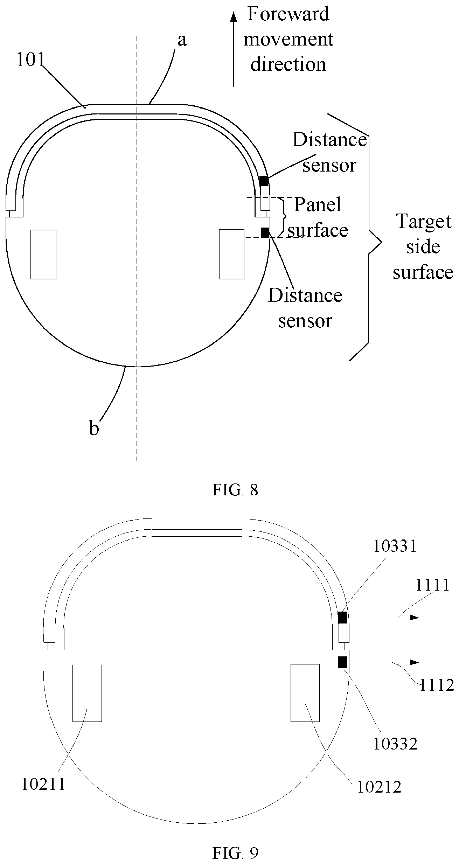

Accordingly, embodiments of the present application include at least two distance sensors 1033. Each of the distance sensors 1033 can be arranged to collect a distance to the obstacle, and the at least two distance sensors 1033 in the present embodiment may be arranged at different positions on the robot body 101 along the forward movement direction of the mobile robot. In other words, the at least two distance sensors are sequentially disposed at different positions on the robot body along the forward movement direction of the mobile robot, for example, at different positions on a same side surface of the robot body 101, specifically at different positions on a target side surface including a non-cylindrical side surface, as shown in FIGS. 1 and 8. Optionally, the at least two distance sensors 1033 may be provided at other parts of the robot body 101, For example, the at least two distance sensors can be arranged in the middle of the top surface of the robot body 101, or at the bottom of the robot body 101, as long as the at least two distance sensors is arranged in order at different positions on the robot body 101 along the forward movement direction of the mobile robot. In this embodiment, the forward movement direction of the mobile robot refers to the direction in which the mobile robot does not turn and goes straight forward. In one embodiment, along the forward movement direction of the mobile robot, at least two distance sensors are sequentially disposed at different positions on the target side surface and in front of the rotation axes of the drive wheels.

In a specific implementation manner, at least two distance sensors 1033 are provided at different positions on a same side surface of the robot body 101, specifically at different positions on the target side surface. Therefore, the distance sensors 1033 at different positions respectively collect the distances between the distance sensors 1033 and the obstacle, and each distance sensor 1033 has its own detection direction due to different positions of the distance sensors 1033. With both detection directions of the different distance sensors 1033, an overall detection range of the distance sensors can be expanded. As shown in FIG. 9, The first distance sensor 10331 can detect a distance between the first distance sensor 10331 and the obstacle in a first detection direction 1111. The second distance sensor 10332 can detect a distance between the second distance sensor 10332 and the obstacle in the second detection direction 1112, that is, for the mobile robot shown in FIG. 9, the detection range is formed by the first detection direction 1111 and the second detection direction 1112. Thus, the at least two distance sensors 1033 arranged at different positions on the robot body 101 increase the range in which the distance between the robot body 101 and the obstacle can be collected, namely increase a range of obstacle detection, so as to improve an accuracy of detecting obstacles by the mobile robot with a non-cylindrical side surface. The first detection direction 1111 is perpendicular to a direction tangent to the target side surface where the first distance sensor 10331 locates, and the second detection direction 1112 is perpendicular to a direction tangent to the target side surface where the second distance sensor 10332 locates.

In this embodiment, the distance between the distance sensor and the obstacle may be any of continuous values within a preset range. In other words, only when the distance between the mobile robot and the obstacle is within the preset range, can the distance sensor acquire the distance to the obstacle. When the distance sensor cannot acquire distance data, it is proved that the mobile robot is far away from the obstacle, so that the mobile robot continues to move in the direction approaching the obstacle until the distance data of distance between the mobile robot and the obstacle is acquired, in such a way, the distance data acquired by the distance sensor on the mobile robot is an actual value of the distance between the distance sensor and the obstacle.

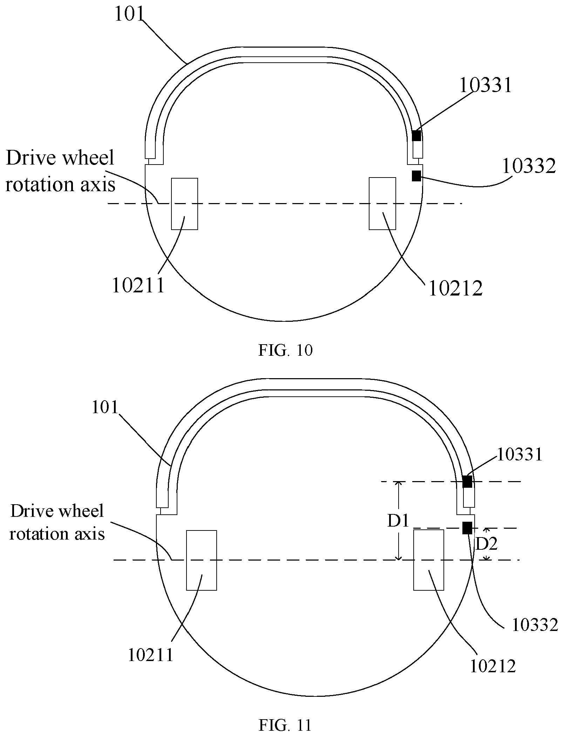

In an embodiment of the present application, the drive wheel 1021 in the walking unit 102 includes two drive wheels: a first drive wheel 10211 and a second drive wheel 10212. In the robot body 101, a rotational axis of the first drive wheel 10211 coincides with a rotational axis of the second drive wheel 10212. The first distance sensor 10331 and the second distance sensor 10332 of the at least two distance sensors 1033 on the mobile robot are disposed on a same side of the rotation axis of the drive wheel. In one embodiment, along the forward movement direction of the mobile robot, at least two of the distance sensors 1033 are disposed before a drive wheel rotation axis, in particular, the first distance sensor 10331 and the second distance sensor 10332 are disposed before the drive wheel rotation axis, or the first distance sensor 10331 and the second distance sensor 10332 are disposed after the drive wheel rotation axis in the forward movement direction of the mobile robot. In one embodiment, the first distance sensor 10331 and the second distance sensor 10332 are disposed before the drive wheel rotation axis, as shown in FIG. 10, in the forward movement direction of the mobile robot, the first distance sensor 10331 and the second distance sensor 10332 are disposed before the drive wheel rotation axis. The drive wheel rotation axis of the present embodiment is the rotation axis of the first drive wheel 10211, or may be the rotation axis of the second drive wheel 10212, that is, the rotation axis of the first drive wheel 10211 (the left drive wheel shown in FIG. 10) and the rotation axis of the second drive wheel 10212 (the right drive wheel shown in FIG. 10) are collectively referred to as the drive wheel rotation axis. The rotation center of the mobile robot during steering is on the drive wheel rotation axis, and moves on the drive wheel rotation axis depending on a difference of rotational speed between the first drive wheel 10211 and the second drive wheel 10212.

Accordingly, in the forward movement direction of the mobile robot, the first distance sensor 10331 is spaced from the drive wheel rotation axis by a first target distance D1, the second distance sensor 10332 is spaced from the drive wheel rotation axis by a second target distance D2, and the second target distance D2 is less than the first target distance D1, that is, the distance between the first distance sensor 10331 and the drive wheel rotation axis is greater than the distance between the second distance sensor 10332 and the drive wheel rotation axis, as shown in FIG. 11.

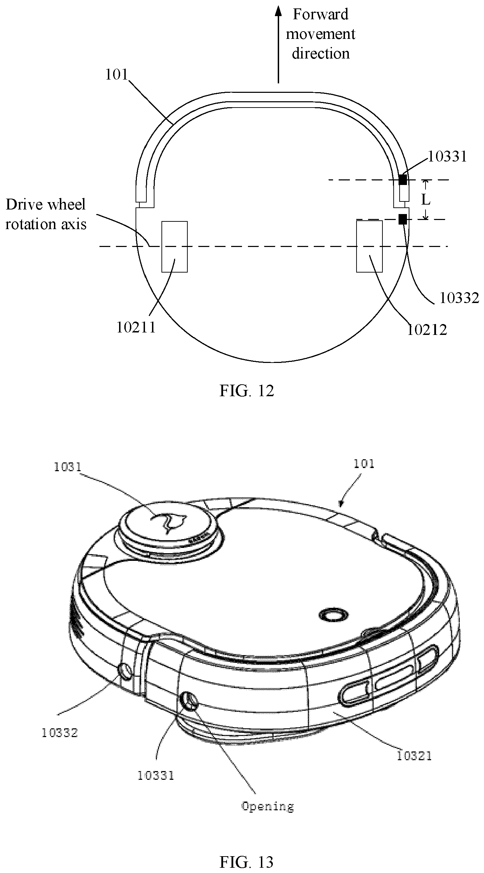

Alternatively, in the forward movement direction of the mobile robot, the first distance sensor 10331 is positioned before the second distance sensor 10332, and the second distance sensor 10332 is positioned before the drive wheel rotation axis. As shown in FIG. 12, that is to say, in the forward movement direction of the mobile robot, the first distance sensor 10331 and the second distance sensor 10332 are both disposed before the drive wheel rotation axis, and the first distance sensor 10331 is further away from the drive wheel rotation axis than the second distance sensor 10332. The first distance sensor 10331 and the second distance sensor 10332 are spaced by a distance L.

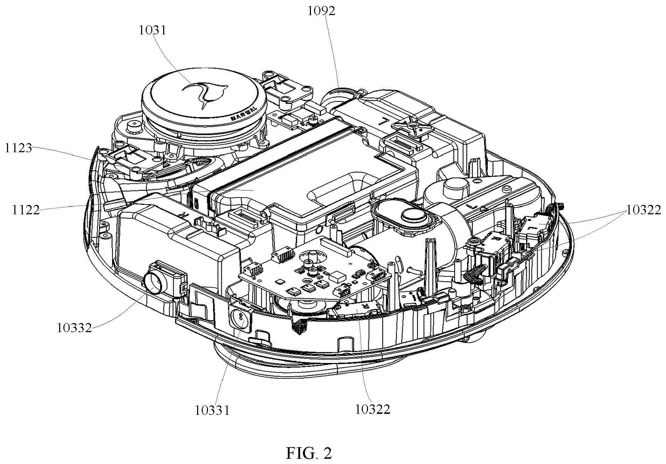

Based on the above, the head of the robot body 101 is provided with a collision shell 10321, and the first distance sensor 10331 may be provided in the collision shell 10321. An opening can be defined on the collision shell 10321, as shown in FIGS. 2 and 13, the opening on the collision shell 10321 is disposed opposite the distance sensor located inside the collision shell 10321. For example, after the first distance sensor 10331 is disposed within the collision shell 10321, the opening on the collision shell 10321 is disposed opposite the first distance sensor 10331, being disposed opposite means that the opening on the collision shell 10321 faces the first distance sensor 10331. Thus, the first distance sensor 10331 can collect the distance to the obstacle through the opening on the collision shell 10321. That is, a detection signal emitted by the first distance sensor 10331 can pass through the opening on the collision shell 10321, and after being reflected by the obstacle, the detection signal can pass through the opening on the collision shell 10321 to be received by the first distance sensor 10331. In this way, the first distance sensor 10331 can detect obstacles in the environment after being used in combination with the opening on the collision shell 10321.

In one implementation manner, different distance sensors in the at least two distance sensors arranged on the mobile robot emit detection signals in parallel emitting directions, and/or, the emitting directions are in a same plane. As such, when the emitting directions of the detection signals emit by the different distance sensors are parallel, it is convenient to combine data detected by the different distance sensors. For example, in the forward movement direction of the mobile robot, the position of the obstacle detected by the distance sensor arranged in the front is before the position of the obstacle detected by the distance sensor located in the rear. The emitting directions of detection signals emitted by different distance sensors are in the same plane, which is convenient for the mobile robot to detect obstacles located on a same plane.

In the present embodiment, two distance sensors: the first distance sensor 10331 and the second distance sensor 10332, being provided on the right side of the robot body 101 is taken as an example for illustrating. Besides, two distance sensors may be provided on the left side of the robot body 101.

In this embodiment, the first distance sensor 10331 and the second distance sensor 10332 may be sensors of a same type, provided to detect distances of the mobile robot to the obstacles, specifically, the first distance sensor 10331 is provided at a forward position in the forward movement direction of the mobile robot, and the second distance sensor 10332 is provided at a backward position in the forward movement direction of the mobile robot. Further, the first distance sensor 10331 and the second distance sensor 10332 are provided on a same side of the drive wheel rotation axis.

A specific arrangement position of the first distance sensor 10331 is that the first distance sensor 10331 is arranged inside the mobile robot near the side edge of the mobile robot and as far as possible from the drive wheel rotation axis. In the present embodiment, the distance of the first distance sensor 10331 from the drive wheel rotation axis is the first target distance D1. In the present embodiment, since the head of the mobile robot is wrapped around by the collision shell 10321, the first distance sensor 10331 is provided inside the collision shell in order to be provided as far forward as possible. The collision shell 10321 is provided with an opening facing the first distance sensor 10331, a transmitter of the first distance sensor 10331 emits a detection signal output through the opening, and when the detection signal is reflected by an obstacle, the reflected detection signal enters through the opening of the collision shell 10321 and reaches the receiver of the first distance sensor 10331. Therefore, it is ensured that the detection signal of the first distance sensor 10331 can detect the surrounding environment and does not affect the movement of the collision shell 10321 relative to the robot body.

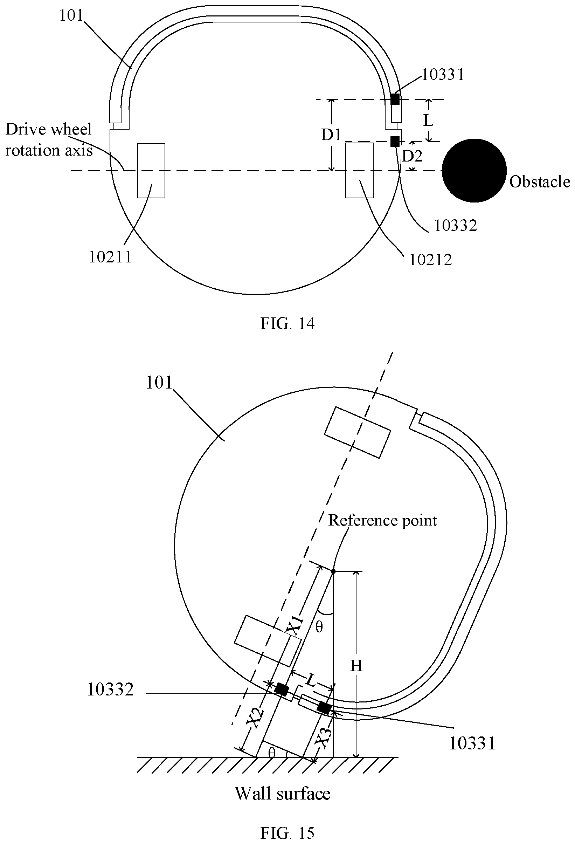

A specific arrangement position of the second distance sensor 10332 is that the second distance sensor 10332 is arranged inside the mobile robot close to the side surface of the mobile robot and the drive wheel rotation axis. The distance of the second distance sensor 10332 from the drive wheel rotation axis is a second target distance D2, and the second target distance D2 is preset. As shown in FIG. 14, the mobile robot detects the obstacle through the second distance sensor 10332 when moving around the obstacle, and a value of D2 is determined by preset minimum obstacles to be bypassed. The first target distance D1 is greater than the second target distance D2, L=D1-D2, and L is a distance between the first distance sensor 10331 and the second distance sensor 10332.

The first target distance D1, the second target distance D2 and L have the following requirements:
L can be set to calculate a target angle, where the target angle is an included angle between the drive wheel rotation axis of the mobile robot and a straight line perpendicular to a wall surface. The target angle may either be an included angle between the forward movement direction of the mobile robot and the wall surface. As shown in FIG. 15, the more accurate the target angle is, a more accurate distance H can be calculated according to the target angle, where the distance H is a distance from a preset reference point on the mobile robot to the wall surface. The reference point is located on a straight line on which an emitting direction of the second distance sensor 10332 emitting the detection signal locates. Because the value of L determines a signal-to-noise ratio when calculating the target angle, the larger L is, the smaller the introduced calculation error will be, and therefore it is more conducive to the measurement of the target angle. The accuracy of the target angle has an impact on the accuracy of calculating the distance H from the mobile robot to the wall surface, so the larger L, the better.

The value of D1 determines the value of L. In order for the value of L to be as large as possible, the first target distance D1 should be as large as possible. For this reason, the first distance sensor 10331 is positioned as far forward as possible in the robot body 101 at a position that can be mounted.

D2 is preset, the value of D2 is related to a target obstacle which is a preset obstacle. When the mobile robot rotates around the target obstacle, the target obstacle is detected by the second distance sensor 10332. The target obstacle is the preset minimum obstacle among the obstacles that the mobile robot needs to detect through the second distance sensor 10332.

D2 is greater than 0 and less than R which is half the length of the target obstacle. In this embodiment, the value of D2 may be preset to be 2-3 cm.

It should be noted that the value of D2 ensures that the second distance sensor 10332 can maintain effective detection of the target obstacle when the mobile robot rotates around the target obstacle. The effective detection means that when the second distance sensor 10332 approaches the target obstacle, the distance from the target obstacle detected by the second distance sensor 10332 becomes smaller; when the second distance sensor 10332 is far away from the target obstacle, the distance from the target obstacle detected by the second distance sensor 10332 becomes larger.

In the present embodiment, a driving motor is provided at the head of the robot body 101 to drive the cleaning member to rotate, a length of the robot body 101 is designed to be longer in order to provide a position for mounting the driving motor, and a D-shaped structure is adopted instead of a flat cylinder structure in order to reduce a volume of the robot body 101. At this time, a side surface of the robot body 101 includes a flat side surface. The side surfaces of the robot body 101 can be understood as side surfaces of the robot body 101 between the foremost position and the rearmost position along the forward movement direction of the mobile robot. Some of the side surfaces are planar side surfaces, or all of the side surfaces are planar side surfaces. After the first distance sensor 10331 and the second distance sensor 10332 are provided on the same side surface (specifically, the first distance sensor 10331 and the second distance sensor 10332 may be provided on a planar side surface or may be provided on positions where a non-planar side surface of the side surfaces is located), Thus, by detecting the environment with the two distance sensors 1033, the detection range of the mobile robot to the environment near the side surface is expanded. When rotating around the obstacle, the cooperation of the two distance sensors 1033 enables the mobile robot to smoothly turn and reduce the possibility of collision with the obstacle.

The following is a description of several scenarios in which the mobile robot in this embodiment uses the first distance sensor and the second distance sensor to detect obstacles:

In a first implementation manner, the mobile robot detects an obstacle using the first distance sensor 10331 as follows: when the mobile robot moves along a planar wall surface such as a wall surface, the mobile robot can judge a positional relationship with the wall surface by using the detection data of the first distance sensor 10331. The rotation center of the mobile robot is on the drive wheel rotation axis. The first distance sensor 10331 is disposed far away from the drive wheel rotation axis, so that when the mobile robot moves along the wall surface, the distance detected by the first distance sensor 10331 is proportional to the distance between the side surface of the robot body 101 and the wall surface when the included angle between the forward movement direction of the robot body 101 and the wall surface is within a preset angle (a smaller angle). That is, if the distance detected by the first distance sensor 10331 becomes larger, the distance between the side surface and the wall surface of the robot body 101 becomes larger. If the distance detected by the first distance sensor 10331 becomes smaller, the distance between the side surface and the wall surface of the robot body 101 becomes smaller.

The distance to the obstacle detected by the first distance sensor 10331 can accurately reflect the turning of the head of the mobile robot relative to the wall surface, so that the turning of the mobile robot can be adjusted based on the distance to the obstacle detected by the first distance sensor 10331.

In addition, when the mobile robot moves along the wall, since the first distance sensor 10331 is close to the head edge of the mobile robot, the mobile robot can judge the end of the wall surface, the corner, or the sudden appearance of the wall surface as soon as possible through the detection data of the first distance sensor 10331. In this way, the mobile robot can use the detection data of the first distance sensor 10331 to quickly make environmental judgment, so as to execute a corresponding strategy as soon as possible. Moreover, since the first distance sensor 10331 is provided in the collision shell 10321, if the first distance sensor 10331 can detect an obstacle, collision detection of the obstacle by the collision sensor 1032 is not required, thereby reducing collision between the cleaning robot and the obstacle and making the movement of the cleaning robot smoother.

In a second implementation manner, the mobile robot detects the obstacle using the second distance sensor 10332 as follows: when the mobile robot moves around the obstacle, such as when the cleaning robot cleans the floor around the obstacle, the obstacle can be detected by the second distance sensor 10332 to obtain the distance to the obstacle. Since the rotation center of the mobile robot is on the drive wheel rotation axis, and the second distance sensor 10332 is disposed near and forward of the drive wheel rotation axis, the second distance sensor 10332 can detect the obstacle in advance, so that when the mobile robot moves forward, the distance detected by the second distance sensor 10332 can be utilized to effectively control the steering of the mobile robot and prevent the side surface of the mobile robot from colliding with the obstacle when the mobile robot moves forward.

In a third implementation, the mobile robot calculates the distance H from the mobile robot to the wall surface based on the distances detected by the first distance sensor 10331 and the second distance sensor 10332 as follows: as shown in FIG. 15, the distance from the mobile robot to the wall surface is represented by the distance H from the preset reference point on the mobile robot to the wall surface. The reference point is located on the straight line on which the emitting direction of the second distance sensor 10332 emitting the detection signal locates. In calculating the distance H, the distance X3 detected by the first distance sensor 10331 and the distance X2 detected by the second distance sensor 10332 are used, where the distance X1 from the reference point to the second distance sensor 10332 and the distance L between the first distance sensor 10331 and the second distance sensor 10332 are known values. In this way, the distance H can be calculated using the following Equation 1 and Equation 2. The distance X3 detected by the first distance sensor 10331 and the distance X2 detected by the second distance sensor 10332 both have certain errors which are calculated in unit mm, so that the larger L, the negligible the error of a difference between X2 and X3 relative to the value of L, and the more accurate the calculated target angle will be, and the more accurate the target angle is, the more accurate the distance H will be according to Equation (2).

$$\frac{X2 - X3}{L} = \tan\theta \qquad \text{Equation (1)}$$

$$(X2 + X1)\cos\theta = H \qquad \text{Equation (2)}$$

It should be understood that there are many kinds of mobile robots according to the present application, such as cleaning robots, exhibition robots, storage robots, etc. When the mobile robot is a cleaning robot, the mobile robot also includes a cleaning member configured to clean the floor. The cleaning member is arranged at the bottom of the robot body. In this way, the cleaning robot moves under the drive of the drive wheel, and at the same time, the cleaning operation can be carried out on the floor through the cleaning member.

To sum up, some descriptions of the mobile robot of the present embodiment are given below:

1) the side surface of the mobile robot includes a non-cylindrical side surface, which results a higher requirement on the positional relationship between the side surface of the mobile robot and the wall surface. At least two distance sensors are arranged in a front-back direction on a same side surface of the mobile robot, so that a range of environmental detection near the side surface of the mobile robot can be expanded.

2) The rotation center of the mobile robot is on the rotation axes of the left and right drive wheels, so that the mobile robot can adjust the difference of rotational speeds of the left and right drive wheels to realize the steering control of the mobile robot. The first distance sensor and the second distance sensor are arranged on the same side of the drive wheel rotation axis which is close to the head of the mobile robot, so that obstacles can be detected as soon as possible through the first distance sensor and the second distance sensor.

3) The non-cylindrical side surface included in the side surfaces of the mobile robot is a planar side surface, which is beneficial to reduce the volume of the mobile robot and make the structure of the mobile robot more regular.

4) The distance between the second distance sensor and the drive wheel rotation axis is D2, and the value of D2 ensures that the second distance sensor can effectively measure the distance to the target obstacle when the mobile robot rotates around the target obstacle. In this way, the mobile robot can smoothly move around obstacles. When D2 is smaller, the mobile robot can move smoothly around smaller obstacles and avoid collision with the obstacles when moving around the obstacles.

5) The distance of the first distance sensor to the drive wheel rotation axis is D1, where the first distance sensor is as far away as possible from the drive wheel rotation axis in the mobile robot, so that the distance L between the first distance sensor and the second distance sensor is as large as possible, so that the distance of the mobile robot from the wall surface can be more accurately calculated through the data detected by the first distance sensor and the second distance sensor.

6) The head of the mobile robot is provided with a collision sensor, the collision sensor includes a collision shell, and the collision shell is arranged around the head of the mobile robot. Since the first distance sensor is set as far forward as possible, the first distance sensor can be disposed in the collision shell. An opening is defined on the collision shell and faces the first distance sensor. The first distance sensor transmits and receives detection signals through the opening, thus ensuring the detection of the environment by the first distance sensor. When the first distance sensor detects an obstacle located beside the side of the mobile robot, the mobile robot can make processing in advance, for example, move in a direction far away from the obstacle, or adjust a steering direction, so that collision detection of the obstacle does not need to be carried out by the collision shell, and the mobile robot moves more smoothly.

In another embodiment of the present application:

as shown in FIGS. 1 to 5, another embodiment of the present application also provides a mobile robot including a robot body 101, a drive wheel 1021, and at least two distance sensor 1033. The drive wheel 1021 and the at least two distance sensors 1033 are provided in the robot body 101. The specific configuration of the mobile robot is as follows: the robot body 101 includes a target side surface. The drive wheel 1021 is provided at a bottom of the robot body 101, and the drive wheel 1021 is provided to drive the robot body 101 to move. The at least two distance sensors 1033 are sequentially arranged at different positions on a target side surface. The distance sensors 1033 are configured to acquire distances to obstacles. The target side surface is a side surface between the foremost position and the rearmost position of the robot body 101 in a forward movement direction of the mobile robot.

Optionally, in the forward movement direction of the mobile robot, the at least two distance sensors 1033 are disposed before the rotation axis of the drive wheel 1021.

In the present embodiment, by providing at least two distance sensors 1033 in front of the rotation axis of the drive wheel 1021, and with both detection directions of the different distance sensors 1033, an overall detection range of the distance sensors can be expanded to increase a detection range for an environment such as side obstacles. The distance sensor 103 at the front end can detect and judge an end of an obstacle, a sudden appearance of a corner or a wall as soon as possible, so as to implement an appropriate strategy as early as possible, and avoid collisions between the front end of the mobile robot and the obstacle as far as possible. A function of the rear end distance sensor 1033 is that, during the rotation around the obstacle, after a head of the mobile robot rotates for a certain angle, it avoids collisions with obstacles caused by detection blind area at the rear end of the mobile robot. Through the cooperation of the two distance sensors 1033, a posture of the mobile robot can be adjusted so that the mobile robot smoothly moves along the obstacle and the body thereof is parallel to a plane of the obstacle or smoothly turns, thus reducing the possibility of collision with the obstacle.

It can be understood that the distance sensor 1033 at the rear end is a sensor adjacent to the drive wheel 1021, and the distance sensor 1033 at the front end is another distance sensor 1033 deviates from the drive wheel 1021.

In one embodiment, the distance sensors 1033 include at least one first distance sensor 10331 and at least one second distance sensor 10332. The mobile robot calculates a distance H from the mobile robot to the wall surface based on distances detected by the first distance sensor 10331 and the second distance sensor 10332 as follows: as shown in FIG. 15, the distance from the mobile robot to the wall surface is represented by the distance H from a preset reference point on the mobile robot to the wall surface. The reference point is located on a straight line on which an emitting direction of the second distance sensor 10332 emitting detection signal locates. In calculating the distance H, the distance X3 detected by the first distance sensor 10331 and the distance X2 detected by the second distance sensor 10332 are used, the distance X1 from the reference point to the second distance sensor 10332 and the distance L between the first distance sensor 10331 and the second distance sensor 10332 are known values. In this way, the distance H can be calculated using the following Equation 1 and Equation 2. The distance X3 detected by the first distance sensor 10331 and the distance X2 detected by the second distance sensor 10332 both have certain errors which are calculated in unit mm, so the larger L, the negligible the error of a difference between X2 and X3 relative to the value of L, and the more accurate the calculated target angle will be, and the more accurate the target angle is, the more accurate the distance H is according to Equation (2).

$$\frac{X2 - X3}{L} = \tan\theta \quad \text{Equation (1)}$$

$$(X2 + X1)\cos\theta = H \quad \text{Equation (2)}$$

Based on the above, by providing at least two distance sensors 1033 on the mobile robot, positions of a plurality of obstacles are acquired by the at least two distance sensors 1033, so that the mobile robot can identify obstacles and improve the accuracy of the mobile robot in detecting obstacles.

In an embodiment of the present application, as shown in FIG. 9, the mobile robot includes a first distance sensor 10331 and a second distance sensor 10332, the second distance sensor 10332 is disposed adjacent to the drive wheel 1021, the first distance sensor 10331 is located on a side of the second distance sensor 10332 facing away from the drive wheel 1021. That is, the first distance sensor 10331 and the second distance sensor 10332 are provided on the robot body.

A first preset distance S of the second distance sensor 10332 to the axis of the drive wheel 1021 is defined, wherein a moving speed of the mobile robot is V, and a time length measured from transmitting a signal by the second distance sensor 10332 to reception of the signal by the robot body is T, S=VT, 0 < t < 1s, 0 < V < 0.3 m/s.

It can be understood that after the mobile robot obtains the signal transmitted by the second distance sensor 10332, the mobile robot turns or stop moving, but there is a certain delay in the transmission of the signal and the response of the mobile robot to the signal, in order to avoid the accident of the mobile robot hitting an obstacle before turning or stopping moving, the second distance sensor 10332 is set at a forward position of the mobile robot. That is, in the forward movement direction of the robot, the second distance sensor 10332 is positioned in front of the axis of the drive wheel 1021.

In one embodiment of the present application, as shown in FIG. 9, emitting directions of different distance sensors 1033 of the at least two distance sensors 1033 emitting detection signals are parallel to each other, and/or the emitting directions of the different distance sensors 1033 of the at least two distance sensors 1033 emitting detection signals are in a same plane. That is, the detection signal from the first distance sensor 10331 and the detection signal from the second distance sensor 10332 are parallel to each other.

In an embodiment of the present application, as shown in FIG. 3, the head of the robot body 101 is provided with a collision shell 10321. A first distance sensor 10331 is disposed within the collision shell 10321. The collision shell 10321 is provided with an opening facing the first distance sensor 10331, through which the first distance sensor 10331 acquires the distance to the obstacle. The first distance sensor 10331 transmits and receives detection signals through the opening, ensuring the detection of the environment by the first distance sensor 10331. When the first distance sensor 10331 detects an obstacle located on the side of the mobile robot, the mobile robot can make processing in advance, for example, move in a direction away from the obstacle, or adjust the steering direction, so that the collision detection of the obstacle does not need to be carried out by the collision shell, and the movement of the mobile robot is smoother.

In an embodiment of the present application, as shown in FIGS. 1 to 5, the robot body 101 includes a square structure body arranged at the front and a semicircular structure body arranged at the rear. The square structure body and the semicircular structure are connected to each other. The square structure body is a rectangular structure with rounded edges at the front. The target side surface is a left or right side surface of the square structure body adjacent to the semicircular structure body in the forward movement direction of the mobile robot.

In an embodiment of the present application, as shown in FIGS. 1 to 5, the mopping member 1101 is provided at the bottom of the robot body 101, and the mopping member 1101 is provided to mop and clean the floor. The cleaning range of the mopping member 1101 during cleaning operation is within a coverage range of edges of the robot body 101.

The drive wheel 1021 includes a first drive wheel 1021 and a second drive wheel 1021. A rotation axis of the first drive wheel 1021 coincides with a rotation axis position of the second drive wheel 1021. A distance from a preset position to a front edge of the robot body 101 in the forward movement direction of the mobile robot is a first distance. The distance from the preset position to an edge of a side portion of the robot body 101 in a direction perpendicular to the forward movement direction of the mobile robot is a second distance, where the first distance is greater than the second distance.

The preset position is an intermediate position between the first drive wheel 1021 and the second drive wheel 1021 on the rotation axis of the first drive wheel 1021 or on the rotation axis of the second drive wheel 1021.

In one embodiment of the present application, the target side surface is a non-cylindrical side surface which is of a planar structure, a wavy curved surface structure or a bend surface structure.

In an embodiment of the present application, the mobile robot further includes a cleaning member arranged to clean the floor, and the cleaning member is arranged at the bottom of the robot body 101.

In an embodiment of the present application, the robot body 101 includes a square structure body arranged at the front and a semicircular structure body arranged at the rear, the square structure body and the semicircular structure are connected, and the square structure body is a rectangular structure with rounded edges at the front. The target side surface is the left or right side of the square structure body adjacent to the semicircular structure body in the forward movement direction of the mobile robot.

In one embodiment of the present application, the distance sensor 1033 is an ultrasonic distance measuring sensor, a laser distance measuring sensor, an infrared distance measuring sensor, or a depth sensor.

The foregoing is only optional embodiments of the present application and is not thus limiting the scope of the present application. Any equivalent structural transformation made by utilizing the contents of the specification and the accompanying drawings of the present application or any directly/indirectly application to other related technical fields based on the inventive concept of the present application is included in the scope of protection of the present application.

Each embodiment in this specification is described in a progressive manner. Each embodiment focuses on its differences from other embodiments, and the same and similar parts between the embodiments can be referred to each other. For the apparatus disclosed in the embodiment, since it corresponds to the method disclosed in the embodiment, the description is relatively simple, and reference can be made to the description of the method.

**Claims**

1. A mobile robot, comprising:

   a robot body comprising a target side surface, the target side surface comprising a non-cylindrical side surface;
   a drive wheel arranged at a bottom of the robot body and configured to drive the robot body to move; and
   at least two distance sensors sequentially arranged at different positions on the target side surface along a forward movement direction of the mobile robot, and configured to acquire distances to obstacles;
   wherein, the target side surface is a side surface between a foremost position and a rearmost position of the robot body in the forward movement direction of the mobile robot.

2. The mobile robot of claim 1, wherein,
   the non-cylindrical side surface is of a planar structure, a wavy curved surface structure or a bend surface structure.

3. The mobile robot of claim 1, wherein the drive wheel comprises a first drive wheel and a second drive wheel, a rotational axis of the first drive wheel coinciding with a rotational axis of the second drive wheel;
   a first distance sensor and a second distance sensor of the at least two distance sensors are arranged on a same side of a drive wheel rotation axis, the drive wheel rotation axis is the rotation axis of the first drive wheel or the rotation axis of the second drive wheel, and the first distance sensor is positioned before the second distance sensor and the second distance sensor is positioned before the drive wheel rotation axis in the forward movement direction of the mobile robot.

4. The mobile robot of claim 3, wherein a head of the robot body is provided with a collision shell, the first distance sensor is disposed within the collision shell, the collision shell is defined with an opening facing the first distance sensor, the first distance sensor is configured to acquire an distance to an obstacle through the opening.

5. The mobile robot of claim 4, wherein emitting directions of different distance sensors of the at least two distance sensors emitting detection signals are parallel, and/or the emitting directions of the different distance sensors of the at least two distance sensors are in a same plane.

6. The mobile robot of claim 1, wherein emitting directions of different distance sensors of the at least two distance sensors emitting detection signals are parallel, and/or the emitting directions of the different distance sensors of the at least two distance sensors are in a same plane.

7. The mobile robot of claim 1, further comprising a cleaning member disposed at the bottom of the robot body and configured to clean a floor.

8. The mobile robot of claim 1, further comprising a mopping member disposed at the bottom of the robot body and configured to mop a floor; wherein a cleaning range of the mopping member in a cleaning work process is within a coverage range of an edge of the robot body;

   wherein the drive wheel comprises a first drive wheel and a second drive wheel, a rotation axis of the first drive wheel coinciding with a rotation axis of the second drive wheel;
   a distance from a preset position to an edge of a front part of the robot body is a first distance along the forward movement direction of the mobile robot;
   a distance from the preset position to an edge of a side of the robot body is a second distance in a direction perpendicular to the forward movement direction of the mobile robot, the first distance is greater than the second distance;
   the preset position is an intermediate position between the first drive wheel and the second drive wheel on the rotation axis of the first drive wheel or on the rotation axis of the second drive wheel.

9. A mobile robot, comprising:

   a robot body comprising a target side surface;

a drive wheel arranged at a bottom of the robot body and configured to drive the robot body to move;
at least two distance sensors configured to collect distances to obstacles,
the at least two distance sensors being sequentially arranged at different positions on the target side surface along a forward movement direction of the mobile robot, the target side surface being a side surface between a foremost position and a rearmost position of the robot body in the forward movement direction of the mobile robot;
wherein the at least two distance sensors are disposed in front of a drive wheel rotation axis in the forward movement direction of the mobile robot.

10. The mobile robot of claim 9, wherein the mobile robot comprises a first distance sensor and a second distance sensor, the second distance sensor being disposed adjacent to the drive wheel, and the first distance sensor being located on a side of the second distance sensor facing away from the drive wheel;
a distance of the second distance sensor from the drive wheel axis is defined as a first preset distance S, a moving speed of the mobile robot is V, and a spent time from start of transmitting a signal to reception of the signal by the robot body is T, S=VT, $0 < t < 1$ s, $0 < V < 0.3$ m/s.

11. The mobile robot of claim 10, wherein different distance sensors of the at least two distance sensors are configured to emit detection signals in parallel directions, and/or the different distance sensors of the at least two distance sensors are configured to emit detection signals in emitting directions of a same plane.

12. The mobile robot of claim 10, wherein a head of the robot body is provided with a collision shell, the first distance sensor is disposed within the collision shell, the collision shell is defined with an opening facing the first distance sensor, the first distance sensor is configured to acquire a distance to an obstacle through the opening.

13. The mobile robot of claim 12, wherein the robot body comprises a square structure body disposed at front and a semicircular structure body disposed at rear, the square structure body and the semicircular structure are connected to each other, and the square structure body is a rectangular structure with rounded edges at front;
the target side surface is a left side surface or a right side surface of the square structure body adjacent to the semicircular structure body in the forward movement direction of the mobile robot.

**14.** The mobile robot of claim 10, wherein the mopping member is disposed at the bottom of the robot body and configured to mop and clean a floor, a cleaning range of the mopping member in a cleaning work process is within a coverage range of a edge of the robot body;

the drive wheel comprises a first drive wheel and a second drive wheel, a rotation axis of the first drive wheel coinciding with a rotation axis of the second drive wheel;

a distance from a preset position to an edge of a front part of the robot body is a first distance along the forward movement direction of the mobile robot, a distance from the preset position to an edge of a side of the robot body in a direction perpendicular to the forward movement direction of the mobile robot is a second distance, the first distance is greater than the second distance;

the preset position is an intermediate position between the first drive wheel and the second drive wheel on the rotation axis of the first drive wheel or on the rotation axis of the second drive wheel.

**15.** The mobile robot of claim 14, wherein the target side surface non-cylindrical side surface is of a planar structure, a wavy curved surface structure, or a bend surface structure.

**16.** The mobile robot of claim 10, further comprising a cleaning member disposed at the bottom of the robot body and configured to clean a floor.

**17.** The mobile robot of claim 10, wherein the target side surface non-cylindrical side surface is of a planar structure, a wavy curved surface structure, or a bend surface structure.

**18.** The mobile robot of claim 10, wherein the robot body comprises a square structure body disposed at front and a semicircular structure body disposed at rear, the square structure body are connected to the semicircular structure body, the square structure body is a rectangular structure with rounded edges at front; the target side surface is a left side surface or a right side surface of the square structure body adjacent to the semicircular structure body in the forward movement direction of the mobile robot.

**19.** The mobile robot of claim 10, wherein the distance sensors are ultrasonic distance measuring sensors, laser distance measuring sensor, infrared distance measuring sensor, or depth sensors.

**20.** The mobile robot of claim 9, wherein the target side surface non-cylindrical side surface is of a planar structure, a wavy curved surface structure, or a bend surface structure.

FIG. 1

FIG. 2

FIG. 3

FIG. 4

FIG. 5

FIG. 6

FIG. 7

Foreward
movement
direction

a

101

Distance
sensor

Panel
surface

Distance
sensor

Target
side
surface

b

FIG. 8

10331

1111

1112

10332

10211

10212

FIG. 9

101

10331

Drive wheel
rotation axis

10332

10211

10212

FIG. 10

101

10331

Drive wheel
rotation axis

D1

D2

10211

10212

10332

FIG. 11

Forward
movement
direction

101

10331

Drive wheel
rotation axis

L

10332

10211

10212

FIG. 12

1031

101

10332

10331

10321

Opening

FIG. 13

FIG. 14

FIG. 15

## INTERNATIONAL SEARCH REPORT

| International application No. |
| --- |
| **PCT/CN2019/109073** |

| **A.** | **CLASSIFICATION OF SUBJECT MATTER** |
| --- | --- |

A47L 11/24(2006.01)i;  A47L 11/40(2006.01)i;  A47L 11/28(2006.01)i

According to International Patent Classification (IPC) or to both national classification and IPC

| **B.** | **FIELDS SEARCHED** |
| --- | --- |

Minimum documentation searched (classification system followed by classification symbols)

A47L

Documentation searched other than minimum documentation to the extent that such documents are included in the fields searched

Electronic data base consulted during the international search (name of data base and, where practicable, search terms used)

CNPAT, WPI, EPODOC, CNKI: 机器人, 移动, 非圆柱, 侧, 距离传感器, 避障, 障碍, 接近传感器, 探测, 检测, 驱动, 轮, robot, mov+, side?, distance, proximity, sensor?, driv+, wheel

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| PX | CN 109512344 A (NARWAL INTELLIGENCE TECHNOLOGY (DONGGUAN) CO., LTD.) 26 March 2019 (2019-03-26) claims 1-10, and description, paragraphs [0058]-[0093] | 1-9, 20 |
| PX | CN 109528101 A (NARWAL INTELLIGENCE TECHNOLOGY (DONGGUAN) CO., LTD.) 29 March 2019 (2019-03-29) description, paragraphs [0063]-[0084], and figures 1-4 | 1-4, 7, 9, 20 |
| X | JP 2014204891 A (MITSUBISHI ELECTRIC CORP. et al.) 30 October 2014 (2014-10-30) description, paragraphs [0012]-[0029] and [0087]-[0096], and figures 1, 2, and 20 | 1-20 |
| A | CN 108201427 A (YANCHENG VOCATIONAL INSTITUTE OF INDUSTRY TECHNOLOGY) 26 June 2018 (2018-06-26) entire document | 1-20 |
| A | CN 205247205 U (IROBOT CORP.) 18 May 2016 (2016-05-18) entire document | 1-20 |
| A | CN 106974593 A (SHENZHEN XINGHONG CLOUD TECHNOLOGY CO., LTD.) 25 July 2017 (2017-07-25) entire document | 1-20 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 December 2019** | **27 December 2019** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2019/109073** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 104068787 A (HITACHI APPLIANCES, INC.) 01 October 2014 (2014-10-01) entire document | 1-20 |
| A | WO 2009011542 A1 (LG ELECTRONICS INC. et al.) 22 January 2009 (2009-01-22) entire document | 1-20 |

Form PCT/ISA/210 (second sheet) (January 2015)

**INTERNATIONAL SEARCH REPORT**
Information on patent family members

International application No.

**PCT/CN2019/109073**

| Patent document cited in search report | | | Publication date (day/month/year) | Patent family member(s) | | | Publication date (day/month/year) |
|---|---|---|---|---|---|---|---|
| CN | 109512344 | A | 26 March 2019 | None | | | |
| CN | 109528101 | A | 29 March 2019 | None | | | |
| JP | 2014204891 | A | 30 October 2014 | JP | 6155784 | B2 | 05 July 2017 |
| CN | 108201427 | A | 26 June 2018 | CN | 209301032 | U | 27 August 2019 |
| CN | 205247205 | U | 18 May 2016 | US | 2017239813 | A1 | 24 August 2017 |
| | | | | EP | 3271784 | A4 | 31 October 2018 |
| | | | | WO | 2016148743 | A1 | 22 September 2016 |
| | | | | US | 2016271795 | A1 | 22 September 2016 |
| | | | | CN | 106200633 | A | 07 December 2016 |
| | | | | EP | 3271784 | A1 | 24 January 2018 |
| | | | | US | 9630319 | B2 | 25 April 2017 |
| CN | 106974593 | A | 25 July 2017 | None | | | |
| CN | 104068787 | A | 01 October 2014 | CN | 104068787 | B | 12 April 2017 |
| | | | | JP | 5957407 | B2 | 27 July 2016 |
| | | | | JP | 2014188001 | A | 06 October 2014 |
| | | | | TW | 201501682 | A | 16 January 2015 |
| | | | | TW | 201642795 | A | 16 December 2016 |
| | | | | TW | I559885 | B | 01 December 2016 |
| | | | | TW | I600404 | B | 01 October 2017 |
| WO | 2009011542 | A1 | 22 January 2009 | US | 8489234 | B2 | 16 July 2013 |
| | | | | US | 2010286825 | A1 | 11 November 2010 |
| | | | | KR | 100902929 | B1 | 15 June 2009 |
| | | | | KR | 20090008720 | A | 22 January 2009 |
| | | | | KR | 101401447 | B1 | 29 May 2014 |
| | | | | KR | 20090052242 | A | 25 May 2009 |

Form PCT/ISA/210 (patent family annex) (January 2015)